# EUROPÄISCHE PATENTSCHRIFT

(11) **EP 1 585 906 B1**
(45) Veröffentlichungstag und Bekanntmachung des Hinweises auf die Patenterteilung: **12.09.2007**
(21) Anmeldenummer: 04702666.1
(22) Anmeldetag: 16.01.2004
(51) Int. Cl.: F16D 13/62, F16B 21/18

(54) **ANORDNUNG ZUR SICHERUNG EINES SPRENGRINGES**
ARRANGEMENT FOR SECURING A SNAP RING
ENSEMBLE POUR BLOQUER UN CIRCLIPS

(30) Priorität: 21.01.2003 DE 10302075
(43) Veröffentlichungstag der Anmeldung: 19.10.2005
(73) Patentinhaber: ZF FRIEDRICHSHAFEN Aktiengesellschaft, 88038 Friedrichshafen (DE)
(72) Erfinder: HAUPT, Josef, 88069 Tettnang (DE)
(86) Internationale Anmeldenummer: PCT/EP2004/000296
(87) Internationale Veröffentlichungsnummer: WO 2004/065809

(56) Entgegenhaltungen:
- EP-A- 0 415 027
- GB-A- 1 477 831
- US-A- 4 018 318
- US-A- 4 261 668
- US-A- 4 757 887
- PATENT ABSTRACTS OF JAPAN vol. 003, no. 148 (M-083), 7. Dezember 1979 (1979-12-07) -& JP 54 123643 A (AISIN SEIKI CO LTD), 26. September 1979 (1979-09-26)

## Beschreibung

Die Erfindung betrifft eine Anordnung zur axialen Abstützung von zwei miteinander rotierenden Bauteilen mittels eines Sprengringes nach dem Oberbegriff des Patentanspruches 1.

Eine solche Anordnung ist aus der EP-A-0 415 027 bekannt.

Die axiale Abstützung von miteinander rotierenden Bauteilen, z. B. von einem Kugellager oder einem Zahnrad auf einer Welle mittels Sprengring ist bekannt. Der Sprengring ist nicht geschlossen, sondern weist einen sich in Umfangrichtung erstreckenden Spalt auf und kann daher in seinem Außen- oder Innendurchmesser durch elastische Verformung verändert werden. Der Sprengring ist auf der Welle in einer eng tolerierten Ringnut gehalten. Ebenso kann der Sprengring in eine Ringnut eines Hohlteiles, z. B. einer Bohrung eingesetzt werden. Die herkömmliche Sicherung des Sprengringes in seiner Nut erfolgt allein durch seine Federspannung. Diese Federspannung reicht unter bestimmten Betriebsbedingungen, z. B. hohen Umfangsgeschwindigkeiten, verbunden mit Schwingungen, nicht aus, um den Sprengring in seiner Nut zu halten. Vielmehr kann es passieren, dass der Sprengring aus seiner Nut heraus tritt und damit seine Aufgabe der axialen Fixierung nicht mehr übernehmen kann. Dies kann zu empfindlichen Schadensfällen führen.

Es ist daher Aufgabe der vorliegenden Erfindung, für eine Anordnung der eingangs genannten Art eine Sprengringsicherung zu schaffen, die ein Austreten des Sprengringes aus seiner Ringnut verhindert, wobei möglichst keine zusätzlichen Kosten entstehen sollen.

Diese Aufgabe wird durch die Merkmale des Patentanspruches 1 gelöst.

Erfindungsgemäß sind im Bereich der Stoßenden Rampen vorgesehen, die ein Aus- oder Einfedern des Sprengringes in diesem Bereich verhindern. Somit sind die Stoßenden formschlüssig gegen radiale Bewegungen gesichert. Je nach dem, ob der Sprengring in einer Bohrung oder auf einem Zylinder angeordnet ist, sind die Rampen entweder radial innerhalb oder radial außerhalb der Stoßenden angeordnet. Dabei ist jedem Stoßende eine einzelne Rampe zugeordnet, die ein Ein- oder Ausfedern jedes Stoßendes in radialer Richtung verhindert. Vorteilhaft ist, dass in dem Umfangsspalt zwischen den beiden Stoßenden ein Anschlag angeordnet ist, der ein Verdrehen des Sprengringes verhindert. Dadurch werden die Stoßenden des Sprengringes im Wirkungsbereich der Rampen gehalten, und der Sprengring kann von sich aus nicht mehr aus der Ringnut austreten.

Der Anschlag zwischen den beiden Stoßenden kann vorteilhafterweise als Noppen ausgebildet sein. Noppen und Rampen haben eine axiale Erstreckung, die im Bereich der axialen Dicke des Sprengringes liegt, vorzugsweise eher etwas geringer. Vorteilhaft ist ferner, wenn die Bauteile als Blechteile ausgebildet und die Rampen und/oder der Noppen aus dem oder den Blechteilen herausgeprägt werden. Eine solche Ausprägung ist praktisch kostenneutral, da das betreffende Prägewerkzeug nur einer geringen Änderung bedarf. Vorteilhaft ist ferner, wenn die Enden des Sprengringes vor den Stoßenden torsionssteif um eine in Umfangsrichtung verlaufende Achse ausgebildet sind. Dies ist bei der Montage der Sprengringe, die in die Ringnut eingefädelt werden, von Vorteil, weil die Sprengringenden bei der Montage über die Rampen gleiten, dabei tordiert werden und schließlich hinter den Rampen einschnappen bzw. einrasten. Von Vorteil ist, wenn der Sprengring an sich zu torsionssteif ist, den Querschnitt in radialer Richtung zu verringern. Durch diese einfache Maßnahme kann die gewünschte Torsionssteifigkeit im Bereich der Stoßenden erreicht werden.

Erfindungsgemäß sind die Blechteile, das abstützende und das abzustützende, Teile einer Lamellenkupplung, d. h. Lamellenträger. Sprengringe werden hier zur axialen Fixierung eines unter axialem Druck stehenden Lamellenpaketes unter äußerst beschränkten Einbauverhältnissen verwendet und sind dabei auch Schwingungsbeanspruchungen unterworfen.

Ein Ausführungsbeispiel der Erfindung ist in der Zeichnung dargestellt und wird im Folgenden näher beschrieben.
Es zeigen:
- Fig. 1: einen Axialschnitt durch eine Lamellenkupplung eines Kraftfahrzeuggetriebes,
- Fig. 2: eine Ansicht in Achsrichtung auf die Lamellenkupplung gemäß Fig. 1,
- Fig. 3: eine perspektivische Teilansicht einer Sprengringsicherung,
- Fig. 4: eine vereinfachte Schnittdarstellung längs der Linie IV-IV in Fig. 3,
- Fig. 5: eine Teilansicht auf das abzustützende Bauteil mit Sprengringsicherung,
- Fig. 6: einen Schnitt längs der Linie VI-VI in Fig. 5,
- Fig. 7: einen Sprengring und
- Fig. 8: eine Einzelheit X aus Fig. 7.

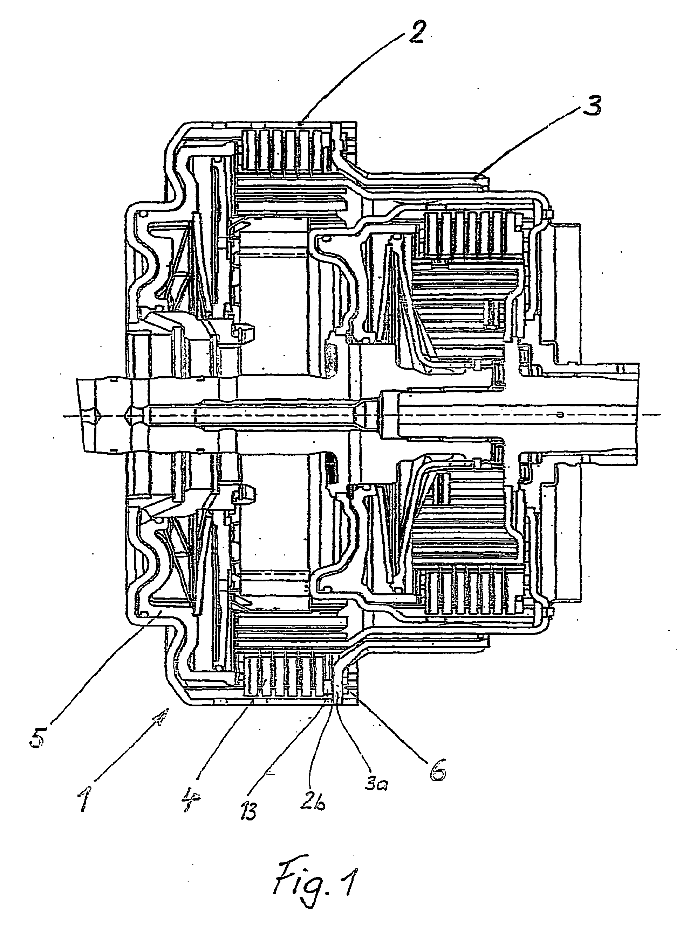

**Fig. 1** zeigt eine Lamellenkupplung 1, d. h. ein Schaltelement aus einem Automatikgetriebe für ein Kraftfahrzeug. Die Lamellenkupplung 1 weist einen äußeren Lamellenträger 2 und einen inneren Lamellenträger 3 auf, der drehfest mit dem äußeren Lamellenträger 1 verbunden ist. Innerhalb des äußeren Lamellenträgers 2 ist ein Lamellenpaket 4 angeordnet, welches durch einen hydraulisch betätigbaren Schaltkolben 5 gegen einen Sprengring 13 gepresst wird. Der Sprengring 13 ist in einer Ringnut des äußeren Lamellenträgers 2 gehalten und so dimensioniert, dass er keiner zusätzlichen Sicherung bedarf. Der innere Lammellenträger 3 weist einen Stirnflansch 3a auf, welcher unmittelbar neben dem Sprengring 13, jedoch berührungsfrei angeordnet und axial in einer Richtung durch einen gesicherten Sprengring 6 festgelegt ist. In der entgegengesetzten Richtung liegt der Stirnflansch 3a an vorzugsweise drei Stimflächenbereichen 2b des äußeren Lamellenträgers 2 an. Der Sprengring 6 ist - im Gegensatz zum Sprengring 13 - aus Bauraum- und Funktionsgründen weniger stark dimensioniert und insofern austrittsgefährdet. Er weist daher eine Sicherung auf, die unten beschrieben wird.

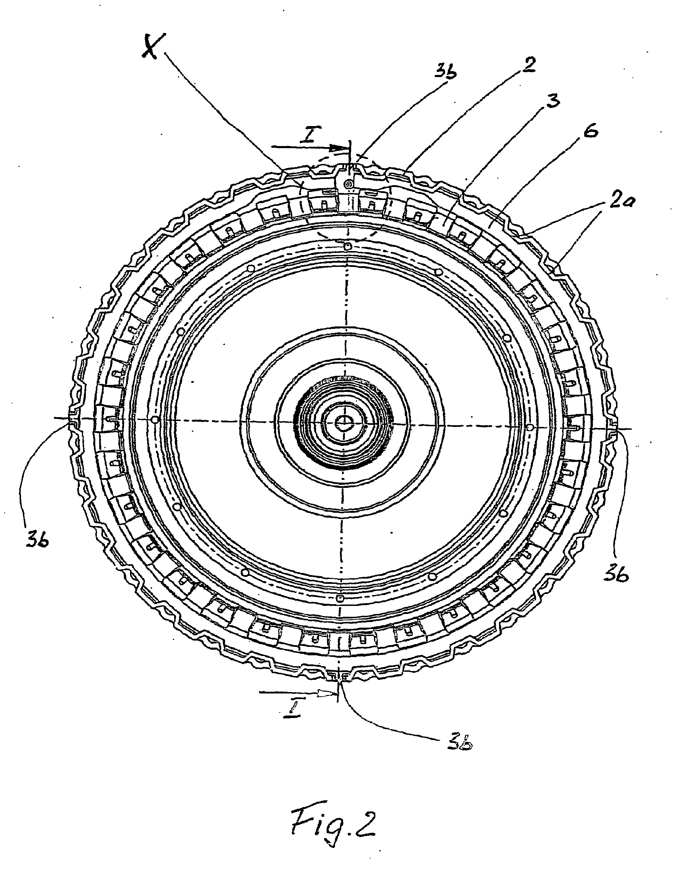

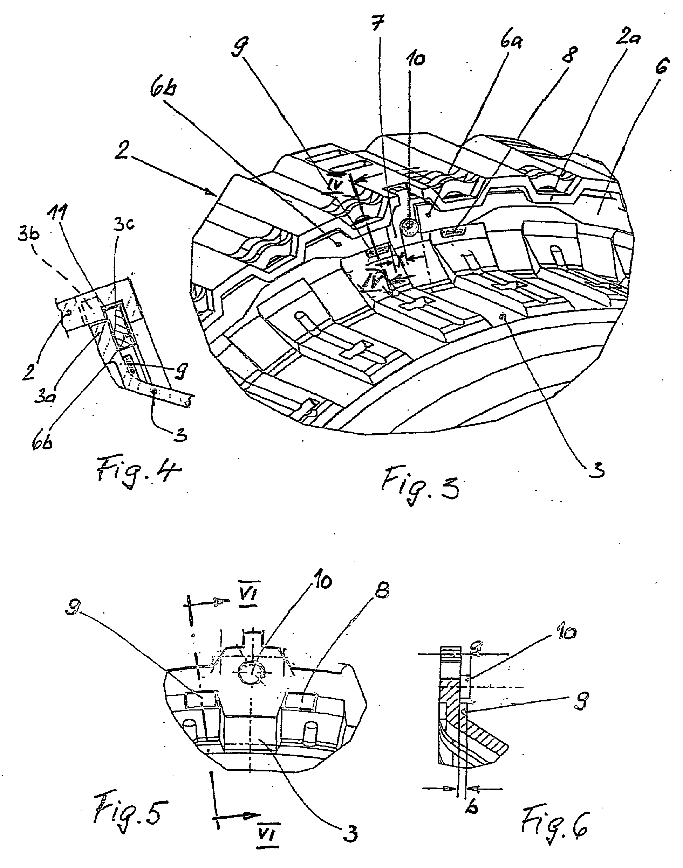

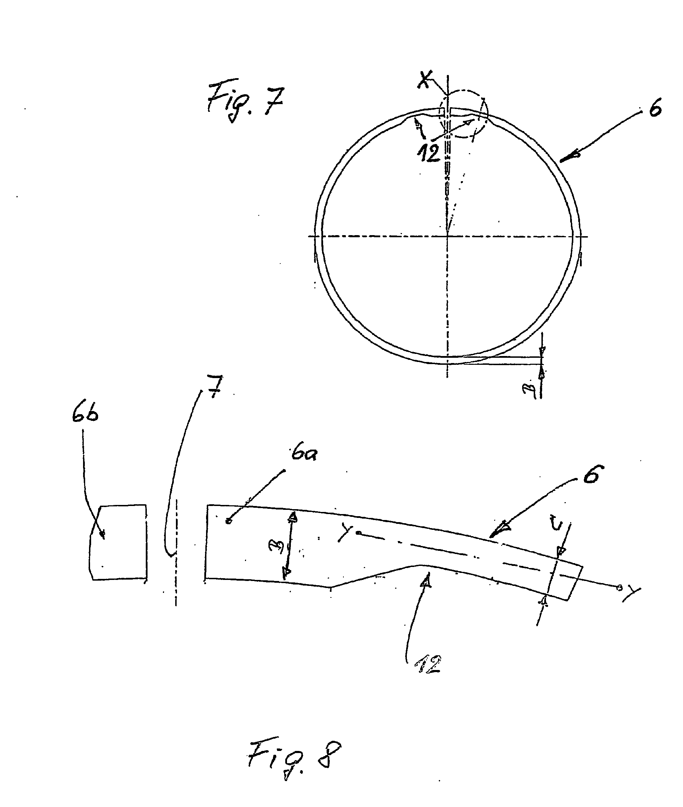

**Fig. 2** zeigt eine Ansicht in Achsrichtung auf den inneren Lamellenträger 3 und den Sprengring 6, der vom äußeren Lamellenträger 2 durch trapezartig ausgebildete Einprägungen 2a (Lamellenverzahnung des äußeren Lamellenträgers 2) übergriffen wird. Der innere Lamellenträger 3 ist über radiale Vorsprünge 3b gegenüber dem äußeren Lamellenträger 2 axial in einer Richtung und in der anderen Richtung durch den Sprengring 6 gesichert. Im gestrichelt eingekreisten Bereich X ist der Sprengring 6 geschlitzt - diese Einzelheit X ist einerseits in perspektivischer Darstellung in Fig. 3 und andererseits nur für das Bauteil 3 in Fig. 5 und 6 dargestellt.

**Fig. 3** zeigt einen Ausschnitt im Bereich der Einzelheit X aus Fig. 2 in perspektivischer Darstellung. Der Sprengring 6 weist zwei Stoßenden 6a, 6b auf, zwischen denen sich ein Umfangsspalt 7 erstreckt. Der Sprengring 6 wird durch die radialen Einprägungen 2a übergriffen und in axialer Richtung gehalten. Radial innerhalb der Stoßenden 6a, 6b sind Rampen 8, 9, so genannte Stützrampen auf dem inneren Lamellenträger 3 angeordnet. Im Bereich des Umfangsspaltes 7 ist ein etwa kreisförmig ausgebildeter Noppen 10 angeordnet, an welchem das Stoßende 6a anliegt. Zwischen der nicht anliegenden Seite des Noppens 10 und dem anderen Stoßende 6b verbleibt ein Umfangsspalt x.

**Fig. 4** zeigt einen vereinfachten Teilschnitt längs der Linie IV-IV in Fig. 3, d. h. durch das Stoßende 6b und die radial innerhalb des Stoßendes 6b angeordnete Rampe 9. Die Rampe 9 bildet einen Absatz und ist aus dem inneren Lamellenträger 3, der als Blechteil ausgebildet ist, ausgeprägt, d. h. einstückig mit diesem ausgebildet. In dem äußeren Lamellenträger 2 ist eine Ringnut 11 angeordnet, in welche der Sprengring 6 mit seinen Stoßenden 6a, 6b eingesetzt und axial fixiert ist. Gegen den aus der Ringnut 11 radial nach innen ragenden Bereich des Sprengringes 6 bzw. 6b legt sich der Stirnflansch 3a mit einer Stirnfläche 3c an, sodass der innere Lamellenträgers 3 in axialer Richtung abgestützt ist.

**Fig. 5** zeigt eine Teilansicht des inneren Lamellenträgers 3 im Bereich der Einzelheit X in Fig. 2, d. h. die etwa rechteckig ausgebildeten Rampen 8, 9 und den zwischen den Rampen, jedoch radial etwas außerhalb angeordneten Noppen 10.

**Fig. 6** zeigt einen Schnitt längs der Linie VI-VI in Fig. 5, wobei die Profile der Rampe 9 und des Noppens 10 erkennbar sind. Die axiale Erstreckung a von Noppen 10 und die axiale Erstreckung b der Rampe 9 bzw. 8 liegen im Bereich der axialen Erstreckung des Sprengringes 6. Auch die Noppe 10 ist aus dem Blechteil 3 ausgeprägt. Insofern können sowohl die Rampen 8, 9 als auch der Noppen 10 einfach und ohne zusätzlichen Arbeitsgang einstückig mit dem Lamellenträger 3 hergestellt werden. Die axiale Tiefe a von Rampen 8, 9 und die axiale Tiefe b des Noppen 10 sind vorzugsweise geringer als die des Springringes 6.

**Fig. 7** zeigt den Sprengring 6 als Einzelteil. Seine radiale Erstreckung ist mit B gekennzeichnet. Der Sprengring weist über den gesamten Umfang dieses Maß B auf - mit Ausnahme von zwei Ausnehmungen 12, die im Bereich des Umfangsspaltes 7 und der Stoßenden 6a, 6b angeordnet sind.

**Fig. 8** zeigt eine Einzelheit X im Bereich des Umfangsspaltes 7 und der Ausnehmung 12 der Fig. 7. Die beiden Stoßenden 6a, 6b des Sprengringes 6 bilden zwischen sich den Umfangspalt 7. Die Stoßenden 6a, 6b weisen im Bereich des Umfangsspaltes das Maß B auf. An das Stoßende 6a schließt sich auf der dem Spalt 7 abgewandten Seite eine Ausnehmung 12 an, die zu einer Verringerung der Höhe des Sprengringes führt, die mit C bezeichnet ist. Im Bereich dieses verringerten Querschnittes ist eine etwa tangential verlaufende Achse Y-Y eingezeichnet, die die Torsionsachse des Sprengringes 6 in diesem Bereich bildet.

Die Funktion des Sprengringes 6 wird im Folgenden erläutert: zunächst wird der Sprengring 6 montiert, d. h. in die Ringnut 11 (Fig. 4) eingefädelt. Dies erfolgt etwa bis zu der Position, die in Fig. 3 dargestellt ist, d. h. das Stoßende 6b liegt etwa bündig zu der Rampe 9. Das andere Stoßende 6a liegt allerdings noch nicht in der Ringnut, sondern etwas radial innerhalb, d. h. in axialer Richtung gesehen, vor der Rampe 8, wobei der Querschnitt des Sprengringes tordiert ist. Beim Ausführungsbeispiel gemäß Fig. 8 heißt dies, dass das Stoßende 6a um die Torsionsachse Y-Y gegenüber dem geringeren, mit C gekennzeichneten Querschnitt tordiert ist. Um die auftretenden Torsionskräfte bzw. Torsionsmomente entsprechend anzupassen, ist der Sprengringquerschnitt im Ausführungsbeispiel gemäß Fig. 8 entsprechend verringert worden (der Sprengringquerschnitt wurde dadurch torsionsweicher). Um das tordierte Stoßende 6a endgültig in seine Position in die Ringnut 11 zu bringen, wird es radial nach außen gedrückt und springt dann in seine nicht tordierte Position gemäß Fig. 4 zurück und ist damit gleichzeitig hinter der Rampe 8 eingerastet. Ein Ausfedern aus der Nut 11, radial nach innen, ist nunmehr durch die beiden Rampen 8, 9 blockiert. Damit sich der Sprengring 6 in Umfangsrichtung nicht verschiebt und die Stoßenden 6a, 6b möglicherweise in Umfangsrichtung gegenüber den Rampen 8, 9 versetzt würden, ist im Bereich des Umfangsspaltes 7 bzw. zwischen den Rampen 8, 9 der Noppen 10 angeordnet. Damit ist nur noch ein geringeres Umfangsspiel x (Fig. 3) möglich, was jedoch so gewählt ist, dass die Rampen 8, 9 immer innerhalb der Stoßenden 6a, 6b liegen.

Die Erfindung wurde oben anhand einer Lamellenkupplung mit einem äußeren und einem inneren Lamellenträger erläutert, d. h. mit einem Sprengring, der in einer Bohrung bzw. einem hohlzylindrischen Teil angeordnet ist. Es liegt jedoch auch im Rahmen der Erfindung, den Sprengring auf der Außenfläche eines zylindrischen Lamellenträgers anzubringen. In diesem Falle wären die Rampen radial außerhalb des Sprengringes anzuordnen, um ein radiales Ausfedern der Stoßenden zu verhindern.

### Bezugszeichen

- 1: Lamellenkupplung
- 2: äußerer Lamellenträger
- 2a: Einprägung (Lamellenverzahnung)
- 2b: Stirnflächenbereich
- 3: innerer Lamellenträger
- 3a: Stirnflansch
- 3b: radialer Vorsprung
- 3c: Stirnfläche
- 4: Lamellenpaket
- 5: Schaltkolben
- 6: Sprengring (gesichert)
- 6a: Stoßende
- 6b: Stoßende
- 7: Umfangsspalt
- 8: Rampe
- 9: Rampe
- 10.: Noppen
- 11: Ringnut
- 12: Ausnehmung
- 13: Sprengring (nicht gesichert)

## Patentansprüche

1. Anordnung zur axialen Abstützung von zwei miteinander rotierenden Bauteilen (2, 3) mittels eines Sprengringes (6), der zwei durch einen Umfangsspalt (7) beabstandete, im Bereich eines radialen Federweges bewegliche Stoßenden (6a, 6b) aufweist und in eine Ringnut (11) des abstützenden Bauteiles (2) eingesetzt ist, **dadurch gekennzeichnet, dass** das abzustützende Bauteil (3) zwei Rampen (8, 9) im Bereich des radialen Federweges der Stoßenden (6a, 6b) des Sprengringes (6) aufweist, wobei die Rampen (8, 9) und das abzustützende Bauteil (3) einstückig ausgeführt sind und jedem Stoßende (6a, 6b) des Sprengringes (6) je eine Rampe (8, 9) zugeordnet ist, wobei die Rampen (8, 9) radial innerhalb oder radial außerhalb der Stoßenden (6a, 6b) des Sprengrings (6) angeordnet sind, dass zwischen den Stoßenden (6a, 6b) des Sprengrings (6) im Bereich des Umfangsspaltes (7) des Sprengrings (6) ein Anschlag (10) angeordnet ist und dass das abstützende Bauteil (2) und das abzustützende Bauteil (3) jeweils ein Kupplungslamellenträger ist.

2. Anordnung nach Anspruch 1, **dadurch gekennzeichnet, dass** das abstützende Bauteil (2) eine etwa hohlzylindrische Innenfläche oder eine Bohrung aufweist, in welche die Ringnut (11) eingearbeitet ist, und dass die Rampen (8, 9) radial innerhalb der Stoßenden (6a, 6b) des Sprengrings (6) angeordnet sind.

3. Anordnung nach Anspruch 1, **dadurch gekennzeichnet, dass** das abstützende Bauteil eine zylindrische Außenfläche aufweist, in welche die Ringnut eingearbeitet ist, und dass die Rampen radial außerhalb der Stoßenden des Sprengrings angeordnet sind.

4. Anordnung nach Anspruch 3, **dadurch gekennzeichnet, dass** der zwischen den Stoßenden (6a, 6b) des Sprengrings (6) angeordnete Anschlag (10) als Noppen ausgebildet und auf dem abzustützenden Bauteil (3) angeordnet ist.

5. Anordnung nach einem der Ansprüche 1 bis 4, **dadurch gekennzeichnet, dass** das abzustützende Bauteil als Blechteil (3) ausgebildet ist.

6. Anordnung nach einem der Ansprüche 1 bis 5, **dadurch gekennzeichnet, dass** das abstützende Bauteil als Blechteil (2) ausgebildet ist.

7. Anordnung nach Anspruch 5 oder 6, **dadurch gekennzeichnet, dass** die Rampen (8,9) aus dem abzustützenden Blechteil (3) geprägt sind.

8. Anordnung nach Anspruch 5, 6 oder 7, **dadurch gekennzeichnet, dass** der Noppen (10) aus dem abzustützenden Blechteil (3) geprägt ist.

9. Anordnung nach einem der Ansprüche 1 bis 8, **dadurch gekennzeichnet, dass** der Sprengring (6) im Bereich der Stoßenden (6a, 6b) um je eine in Umfangsrichtung verlaufende Achse Y-Y torsionssteif ausgebildet ist.

10. Anordnung nach Anspruch 9, **dadurch gekennzeichnet, dass** der Sprengring (6) in Umfangsbereichen hinter den Stoßenden (6a, 6b) Ausnehmungen (12) zur Querschnittsverringerung aufweist.

11. Anordnung nach einem der Ansprüche 1 bis 9, **dadurch gekennzeichnet, dass** das abstützende Bauteil als äußerer Lamellenträger (2) und das abzustützende Bauteil als innerer Lamellenträger (3) einer benachbart zur ersten Lamellenkupplung (1) angeordneten zweiten Lamellenkupplung ausgebildet ist.

## Claims

1. The invention relates to an arrangement for axial support of two rotating components (2, 3) by means of a circlip (6), which features two butt ends (6a, 6b) which are spaced by a peripheral gap (7) and are movable within the range of a radial spring travel, and which is inserted into an annular groove (11) of the supporting component (2), **characterized in that** the component to be supported (3) features two ramps (8, 9) in the range of the radial spring travel of the butt ends (6a, 6b) of the circlip (6), with the ramps (8, 9) and the component to be supported (3) constituting a single piece and each butt end (6a, 6b) of the circlip (6) having one ramp (8, 9) assigned to it, with the ramps (8, 9) being arranged radially within or radially outside the butt ends (6a, 6b) of the circlip (6); and that a stop (10) is arranged between the butt ends (6a, 6b) of the circlip (6) in the area of the peripheral gap (7) of the circlip (6); and that the supporting component (2) as well as the component to be supported (3) are clutch disk carriers.

2. Arrangement according to claim 1, **characterized in that** the component to be supported (2) features a hollow cylindrical inner surface or a bore in which the annular groove (11) is embedded; and that the ramps (8, 9) are arranged radially within the butt ends (6a, 6b) of the circlip.

3. Arrangement according to claim 1, **characterized in that** the component to be supported (2) features a cylindrical outer surface in which the annular groove is embedded; and that the ramps are arranged radially outside the butt ends of the circlip.

4. Arrangement according to claim 3, **characterized in that** the stop (10) arranged between the butt ends (6a, 6b) of the circlip (6) is designed as studs and is arranged on the component to be supported (3).

5. Arrangement according to one of the claims 1 through 4, **characterized in that** the component to be supported is a sheet-metal part (3).

6. Arrangement according to one of the claims 1 through 5, **characterized in that** the supporting component is a sheet-metal part (2).

7. Arrangement according to claim 5 or 6, **characterized in that** the ramps (8, 9) are constituted by the component to be supported (3).

8. Arrangement according to claim 5, 6 or 7, **characterized in that** the studded stop (10) is constituted by the component to be supported (3).

9. Arrangement according to one of the claims 1 through 8, **characterized in that** the circlip (6) in the area of the butt ends (6a, 6b) is torsionally rigid as regards each Y-Y axis in circumferential direction.

10. Arrangement according to claim 9, **characterized in that** the circlip (6) in peripheral areas behind the butt ends (6a, 6b) features recesses (12) for cross-section reduction.

11. Arrangement according to one of the claims 1 through 9, **characterized in that** the supporting component is designed as outer disk carrier (2) and the component to be supported as inner disk carrier (3) of a second multidisk clutch arranged adjacent to the first multidisk clutch (1).

## Revendications

1. Dispositif pour soutenir axialement deux éléments (2, 3) tournant ensemble au moyen d'un circlip (6) qui comporte deux extrémités d'aboutement (6a, 6b) séparées par une fente circonférentielle (7) et mobiles dans la région d'une course élastique radiale, et qui est encastré dans une gorge annulaire (11) de l'élément à soutenir (2), **caractérisé en ce que** l'élément à soutenir (3) comporte deux rampes (8, 9) dans la région de la course élastique radiale des extrémités d'aboutement (6a, 6b) du circlip (6), les rampes (8, 9) et l'élément à soutenir (3) étant en une seule pièce et une rampe (8, 9) est associée à chaque extrémité d'aboutement (6a, 6b) du circlip, les rampes (8, 9) étant disposées radialement à l'intérieur ou radialement à l'extérieur des extrémités d'aboutement (6a, 6b) du circlip (6), **en ce qu'**une butée (10) est disposée entre les extrémités d'aboutement (6a, 6b) du circlip (6) dans la région de la fente circonférentielle (7) du circlip (6), et **en ce que** l'élément de soutien (2) et l'élément soutenu (3) sont constitués chacun par un support de disques d'embrayage.

2. Dispositif selon la revendication 1, **caractérisé en ce que** l'élément de soutien (2) comporte une surface intérieure cylindrique creuse ou un alésage dans lequel la gorge annulaire (11) est usinée, et **en ce que** les rampes (8, 9) sont disposées radialement à l'intérieur des extrémités d'aboutement (6a, 6b) du circlip (6).

3. Dispositif selon la revendication 1, **caractérisé en ce que** l'élément de soutien comporte une surface extérieure cylindrique dans laquelle la gorge annulaire est usinée, et **en ce que** les rampes sont disposées radialement à l'extérieur des extrémités d'aboutement du circlip.

4. Dispositif selon la revendication 3, **caractérisé en ce que** la butée (10) disposée entre les extrémités d'aboutement (6a, 6b) du circlip (6) est constituée par un bossage et est disposée sur l'élément à soutenir (3).

5. Dispositif selon l'une des revendications 1 à 4, **caractérisé en ce que** l'élément à soutenir est constitué par une pièce de tôle (3).

6. Dispositif selon l'une des revendications 1 à 5, **caractérisé en ce que** l'élément de soutien est constitué par une pièce de tôle (2).

7. Dispositif selon la revendication 5 ou 6, **caractérisé en ce que** les rampes (8, 9) sont embouties dans la pièce de tôle à soutenir (3).

8. Dispositif selon la revendication 5, 6 ou 7, **caractérisé en ce que** le bossage (10) est embouti dans la pièce de tôle à soutenir (3).

9. Dispositif selon l'une des revendications 1 à 8, **caractérisé en ce que** le circlip (6) est rigide en torsion dans la région des extrémités d'aboutement (6a, 6b), à chaque fois autour d'un axe Y-Y s'étendant dans la direction circonférentielle.

10. Dispositif selon la revendication 9, **caractérisé en ce que**, dans les régions circonférentielles situées en arrière des extrémités d'aboutement (6a, 6b), le circlip (6) comporte des évidements (12) servant à réduire la section.

11. Dispositif selon l'une des revendications 1 à 9, **caractérisé en ce que** l'élément de soutien est constitué par un support de disques extérieur (2) et l'élément à soutenir par un support de disques intérieur (3) appartenant à un second embrayage à disques disposé adjacent au premier embrayage à disque (1).
